# EUROPEAN PATENT SPECIFICATION

(11) **EP 1 848 641 B1**
(45) Date of publication and mention of the grant of the patent: **07.04.2010**
(21) Application number: 06708041.6
(22) Date of filing: 06.02.2006
(51) Int. Cl.: B65B 51/30

(54) **SEALING AND TRANSVERSAL CUTTING DEVICE FOR PACKAGING MACHINES OF LOOSE ELONGATED MATERIAL IN MOTION ALONG A HORIZONTAL PLANE**
SIEGELUNGS- UND QUERSCHNEIDEVORRICHTUNG FÜR VERPACKUNGSMASCHINEN MIT LOSEM LÄNGLICHEM MATERIAL MIT EINER IN EINER HORIZONTALEN EBENE LIEGENDEN BEWEGUNG
DISPOSITIF DE FERMETURE ET DE DECOUPE TRANSVERSALE POUR MACHINES D'EMBALLAGE DE MATERIAU ALLONGE MOBILE LE LONG D'UN PLAN HORIZONTAL

(30) Priority: 17.02.2005 IT MI20050230
(43) Date of publication of application: 31.10.2007
(73) Proprietor: Altopack S.P.A., 55011 Altopascio (LU) (IT)
(72) Inventor: VEZZANI, Paolo, I-55012 Capannori (IT)
(74) Representative: Mittler, Enrico
(86) International application number: PCT/EP2006/050694
(87) International publication number: WO 2006/087273

(56) References cited:
- EP-A- 1 253 085
- EP-A- 1 319 600
- WO-A-2006/008282
- US-A- 4 563 862
- US-A- 4 663 917
- US-A- 4 947 618
- US-A- 6 161 366
- US-B1- 6 519 922

## Description

The present invention refers to a sealing and transversal cutting device for packaging machines of loose elongated material in motion along a horizontal plane.

The operations of filling and closing plastic bags containing loose elongated material, in particular pasta such as spaghetti or similar, are extremely critical.

In the conventional machines the sealing and cutting of the plastic film come about by means of a pair of pincers rotating in reverse directions that support sealing means and a blade. When said pincers meet during the rotation, they tighten the film between them, sealing it and cut it.

A common drawback with these machines is that it is necessary to prevent the filling material from remaining caught between the pincers.

EP 1253085 discloses a device according to the preamble of claim 1. This device comprises spring members actuating bar members. WO-2006/008282 discloses a vertical device for loose products.

Object of the present invention is to produce a film sealing and cutting device for elongated filling material that flows along a horizontal plane, which comprises a flexible mechanism, that occupies little space and is easy to use, and which is capable of preventing said elongated filling material from being blocked between the sealing and cutting pincers compromising the very sealing and cutting operations.

In accordance with the invention this object is achieved with a device for sealing and cutting film in packaging machines for loose elongated material which is mobile along a horizontal plane, as disclosed in claim 1.

The presence of the springs gives flexibility to the mechanism guaranteeing the opening of the plates and thus the preflattening of the film in function of the position of the mechanisms themselves. The preflattening plates are thus mobile in relation to the pincers. In addition when they are not in a working position, the above-mentioned plates tend to "wind" the pincers, so that the rotating mechanism occupies an extremely reduced space.

The characteristics of the present invention will be made more evident from the following detailed description of an embodiment thereof illustrated as non-limiting example in the enclosing drawings, in which:
Figure 1 shows a partially sectioned side view of a device according to the invention;
Figure 2 shows a section view according to the line II-II of Figure 1;
Figure 3 shows a section view according to the line III-III of Figure 1;
Figure 4 shows a section view according to the line VI-VI of Figure 1;
Figure 5 shows a schematic view similar to that of Figure 2 with the pincers in a position prior to the opening of the plates;
Figure 6 shows a schematic view similar to that of Figure 2 with the pincers in a position successive to that of Figure 5;
Figure 7 shows a schematic view similar to that of Figure 2 with the pincers in a position successive to that of Figure 6;
Figure 8 shows a schematic view similar to that of Figure 2 with the pincers in a position successive to that of Figure 7;
Figure 9 shows a schematic view similar to that of Figure 2 with the pincers in a position successive to that of Figure 8;
Figure 10 shows a schematic view similar to that of Figure 2 with the pincers in a position successive to that of Figure 9;
Figure 11 shows a schematic view similar to that of Figure 2 with the pincers in a position successive to that of Figure 10;
Figure 12 shows a side view of a mechanism of the device of Figure 1 separated from the device itself;
Figure 13 shows a front view of the mechanism of Figure 12;
Figure 14 shows a section view according to the line XIV-XIV of Figure 12;
Figure 15 shows a plan view from above of Figure 12;
Figure 16 shows a section view according to the line XVI-XVI of Figure 15.

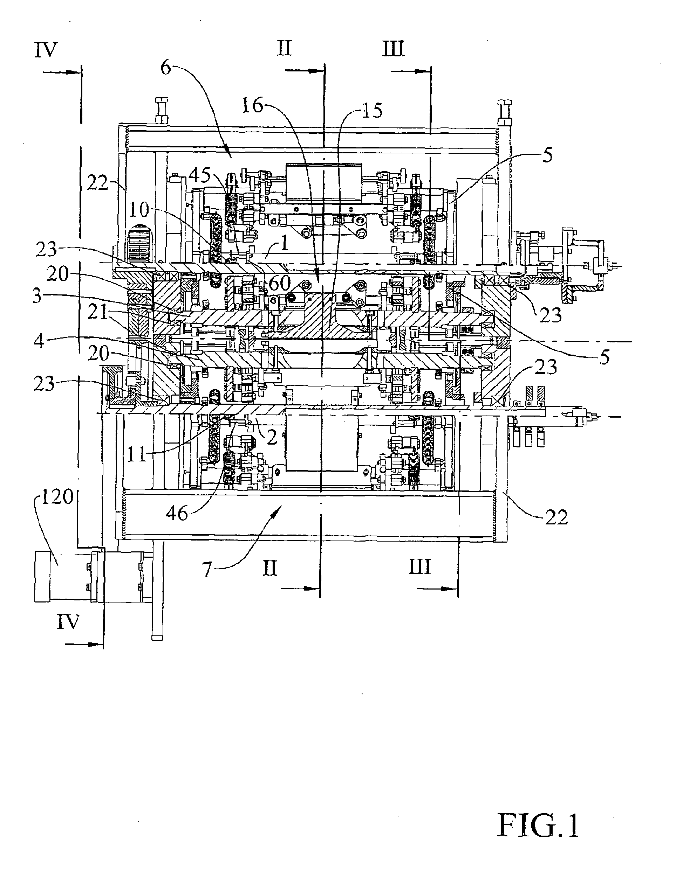

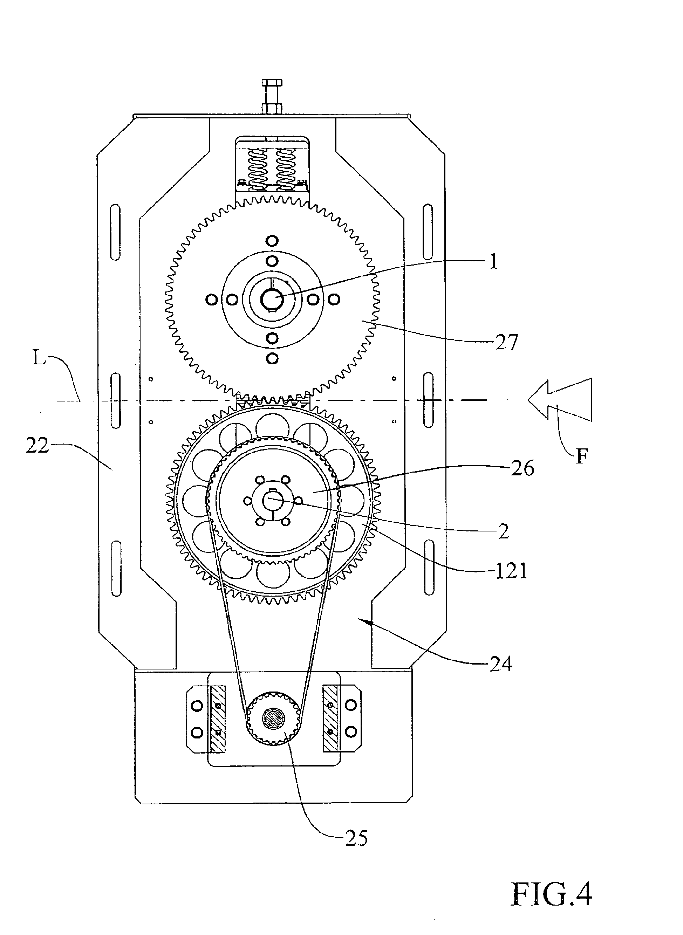

A first rotating transversal shaft 1 and a second rotating transversal shaft 2 synchronised with each other are shown in Figure 1, controlled by a motor 120 by means of a transmission 24 (Figure 4) comprising a sprocket motor 25 and a first gear wheel 26 connected by a belt 40. A second gear wheel 121 is splined to the same shaft 2 of the first gear wheel 26, engaging said second gear wheel 121 with a third gear wheel 27 splined to the shaft 1.

A frame 22 supports said shafts 1-2 by means of bearings 23 suitable for ensuring the rotation in relation to the same frame 22.

Rigid forks 5 connect the shafts 1-2, to which they are splined, to revolving support bodies 3-4 respectively.

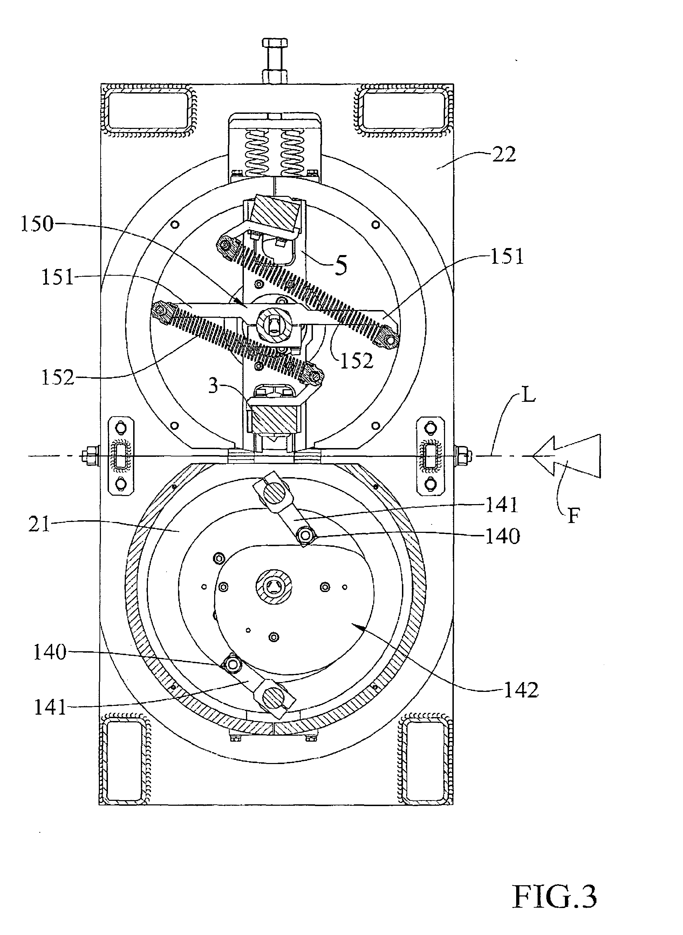

Bodies 150 (Figure 3) are splined to said shafts 1-2 fitted with side arms 151 to which the first ends of springs 152 are connected, the second ends of said springs 152 being connected to the above-mentioned revolving support bodies 3-4.

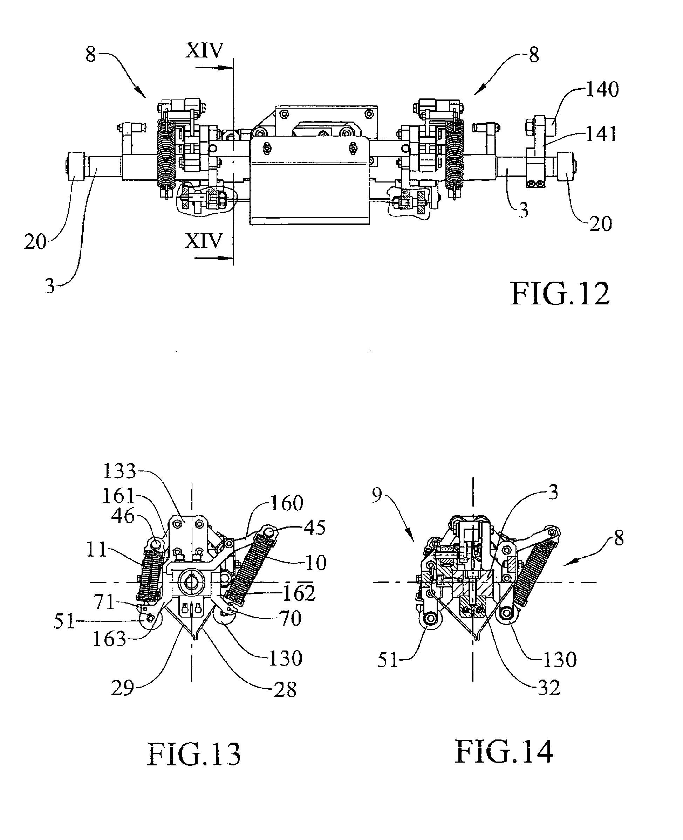

Rotating mechanisms 6-7, which are supported by said support bodies 3-4 respectively, comprise each one a parallelogram 133 (Figure 13) which supports a front wheel 130 and a back wheel 51 and to which a front articulated mobile body 8 and a rear articulated mobile body 9 are hinged.

The front body 8 comprises front mobile arms 160 connected to arms 162 of the parallelogram 133 by means of springs 10.

In the same way the rear body 9 comprises rear mobile arms 161 connected to arms 163 of the parallelogram 133 by means of springs 11.

The springs 10-11 have a first end fixed to the arms 160-161 of the mobile bodies 8-9 by means of pins 45-46, and a second end connected to arms 162-163 of the parallelogram 133 by means of pins 70-71.

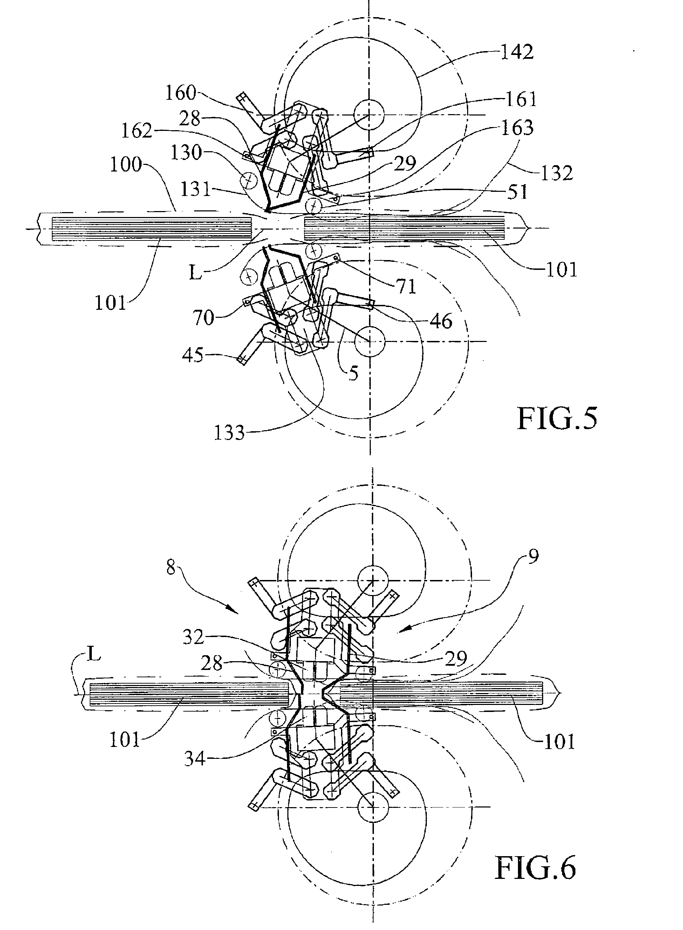

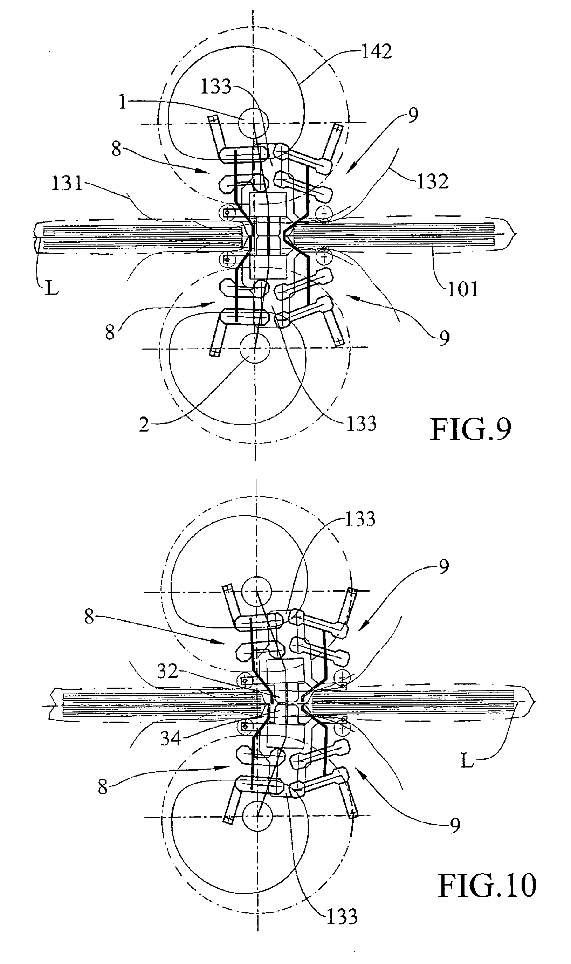

The support bodies 3-4 support pincers 32 and 34 which in the working position (Figures 5-11) tighten and then release a plastic film 100 suitable for collecting elongated filling material 101.

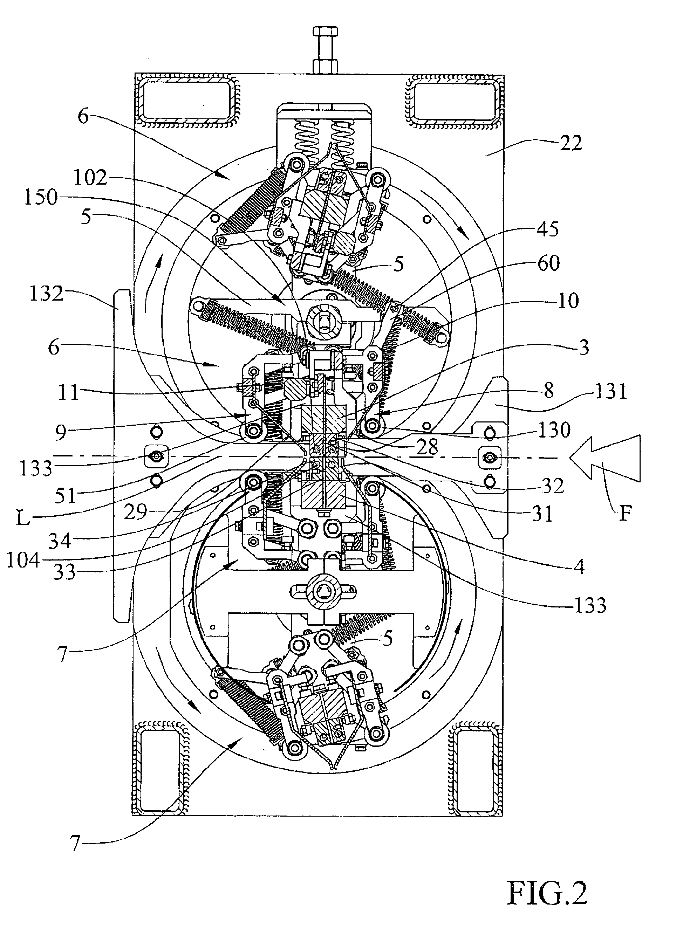

The wheel 130 engages with the front cam 131, while the wheel 51 engages with the rear cam 132 (Figure 2).

In addition the support body 3 supports a mobile blade 15 (Figures 1, 15-16) between a working and a resting position by means of a pneumatically activated mechanism 16.

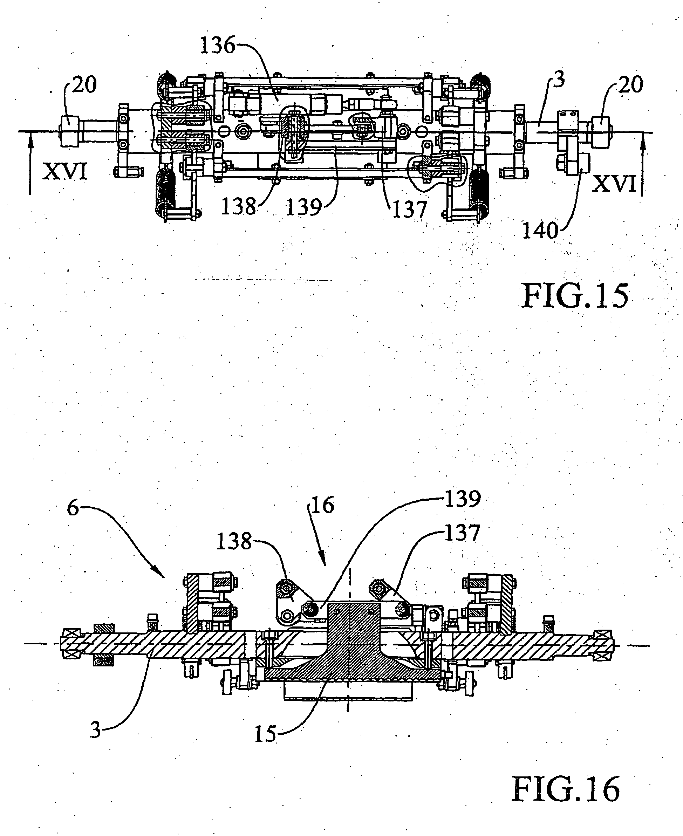

Said mechanism 16 comprises a horizontal pneumatic piston 136 connected to a driving rotating arm 137 which together with a driven rotating arm 138 moves the blade 15 vertically by means of a spacer 139 to which said arms 137-138 (Figure 16) are connected.

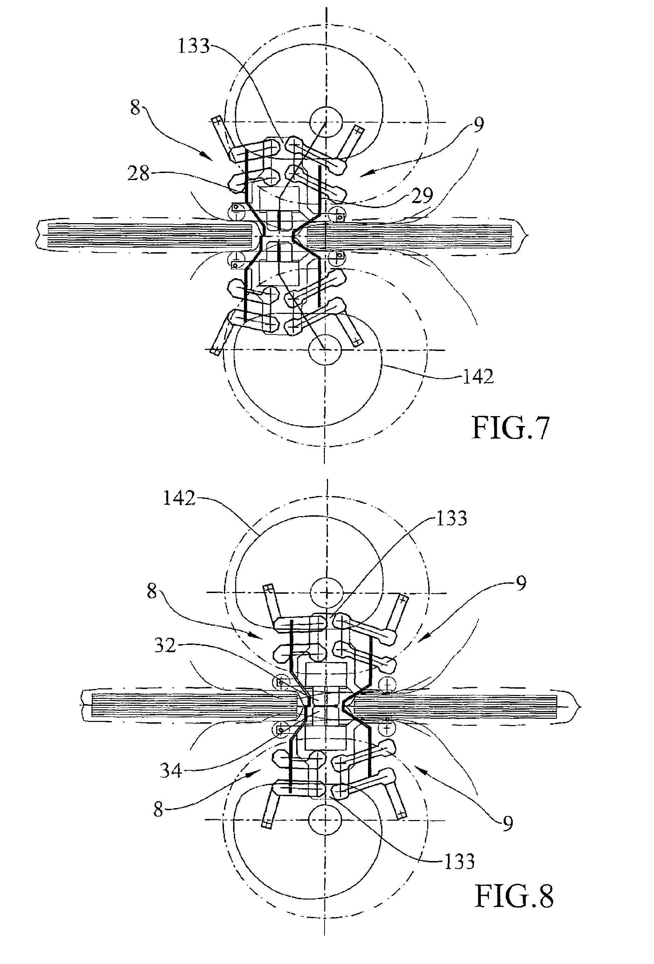

The blade 15 moves through a slit 31 made in the pincers 32, and when it is in the working position (Figure 7) the end of the blade 15 partially occupies a slit 33 made in the pincers 34.

In addition the mobile bodies 8-9 respectively support front preflattening plates 28 and rear preflattening plates 29.

Wheels 20 (Figures 1 and 15), associated to the support bodies 3-4, engage in recesses 21 (Figure 3) enabling the mechanisms 6-7 to carry out an almost circular path.

Further wheels 140, connected to the same support bodies 3-4 by means of arms 141, engage on cams 142 (Figures 3 and 15).

In regard to the operation, the motor 120 moves the shaft 2 (Figure 4), by means of the transmission 24. The engagement between the toothed wheels 121 and 27 also enables the second shaft 1 to rotate.

Considering as a starting position of the device that of Figure 5, the two shafts 1-2 rotate in an opposite direction thus permitting the two mechanisms 6-7 to meet where the plastic film 100 runs horizontally (line L Figures 2-11) in the straight line of the path defined by the cam 142. The entrance direction of the elongated filling material 101 is indicted with a large arrow F (Figures 2-4).

The preflattening plates 28, 29 in the Figures 5-11 are drawn with a thicker line than the other details drawn so as to highlight the relative motion.

In Figure 6 the front plates 28 that meet can be seen, as well as the rear plates 29 preflattening the film 100.

Observing the Figures 5-7 in sequence it is possible to see the variation of the orientation of pincers 32 and 34 due to the profile of the cams 142 with which the wheels 140 engage connected to the support bodies 3-4 by means of the arms 141.

The rear plates 29 open because the rear wheels 51 engage with the rear cam 132 thus generating the movement of the arms 161 of the mobile body 9.

Similarly the front plates 28 open because the front wheels 131 engage with the front cam 131 thus generating the movement of the arms 160 of the mobile body 8.

Until the detachment between the mechanisms 6-7 comes about the filling material 101 is upstream or downstream of the sealing and cutting zone.

When the pincers 32 and 34 have the slits 31 and 33 perfectly vertical, thanks to the orientation set by the cam 142 to the support bodies 3-4, and the same pincers 32 and 34 meeting tightening the film 100 (Figure 8), the device is ready for the sealing and cutting operations.

In the position of Figure 8, in fact, sealing means 102, 104 associated to the front of the pincers 32, 34 tighten the film 100 together, sealing the opposite flaps of the same. In addition an external command moves the pneumatic piston 136, which, by means of the arms 137-138 and the spacer 139, moves downwards the blade 15, which cuts the film 100.

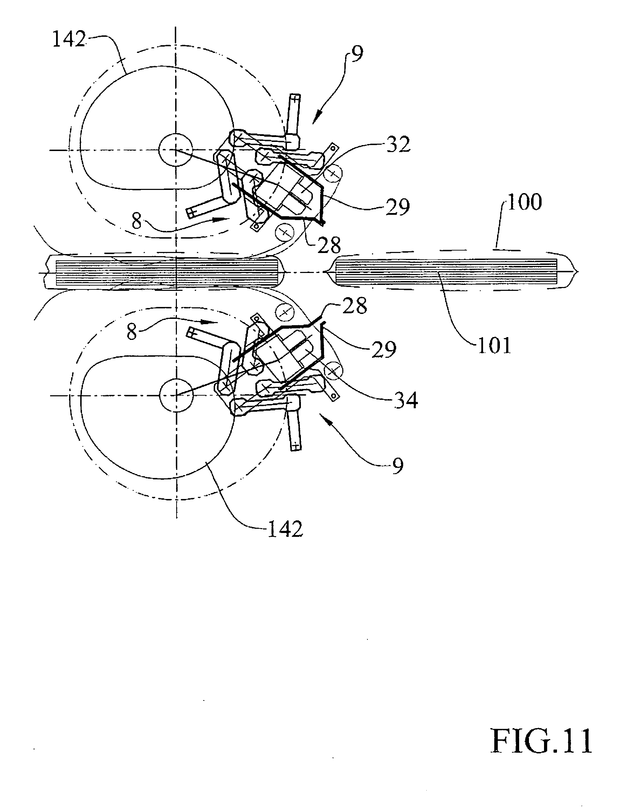

With the cut having been made the mechanisms (6-7) move away from each other (Figure 11) to complete the disengagement of the wheels 130 and 51 from the cams 131 and 132 respectively. Consequently the plates 28-29 close.

From Figure 2 it can be seen that the pincers 32 and 34 are double at 180° between each other. This permits the productivity to be increased.

## Claims

1. Device for sealing and cutting film in packaging machines for loose elongated material which is movable along a horizontal plane, comprising rotating transversal shafts (1-2) synchronised with each other, to which a pair of pincers (32, 34) is secured comprising sealing and cutting means (15),
front and rear pre-flattening plates (28-29),
**characterised in that**
each pincer (32, 34) is supported by a revolving body (3, 4) and is driven by said shafts (1, 2) along an almost circular path of a guiding cam recess (21), engaged with guiding wheels (20) of said pincers,
each revolving body (3, 4) is oriented by a wheel (140) connected to said body (3, 4) by a revolving arm (141) guided by an orientation cam (142),
said front pre-flattening plates (28) are movable between a rest closed position and a work open position forced by the contact between front wheels (130) and a front cam (131) against the closure force of respective springs (10),
said rear pre-flattening plates (29) are movable between a rest closed position and a work open position forced by the contact between wheels (51) and a rear cam (132) against the closure force of respective springs (11),
said springs (10, 11) being operatively interposed between said supporting bodies (3, 4) of the pincers (32, 34) and mobile bodies (8-9) supporting said pre-flattening plates (28, 29) rotatably mounted on said pincers (32, 34), such that they force the motion to the rest closed position,
said transversal shafts (1, 2) being always operative at the same distance to each other.

2. Device according to claim 1, **characterized in that** each body (3, 4) is rotatably supported by rigid forks (5) and elastically connected to side arms (151) of a body splined on said shaft (1, 2) by pincer spring (152).

3. Device according to claims 1 or 2, **characterised in that** said cutting means (15) consist of a mobile blade inside a slit (31) of one (32) of said pincers (32,34), said blade is commanded by a pneumatically activated mechanism (16) comprising a horizontal pneumatic piston (136), a driving rotating arm (137) and a driven rotating arm (138) connected to each other by a spacer (139).

4. Device according to any of claims 1-3, **characterised in that** each shaft (1-2) controls two pairs of pincers (32, 34) arranged at 180° between each other.

## Patentansprüche

1. Vorrichtung zum Abdichten und Schneiden von Folie in Verpackungsmaschinen für unverpacktes bzw. loses Längsmaterial, das entlang einer horizontalen Ebene bewegbar ist, mit miteinander synchronisierten, sich drehenden Transversalwellen (1-2), an welchen ein Paar von Greifern (32, 34) mit Dichtungs- und Schneidmitteln (15) befestigt ist,
vorderen und hinteren Vorglättungsplatten (28-29),
**dadurch gekennzeichnet, dass**
jeder Greifer (32, 34) durch einen sich drehenden Körper (3, 4) gestützt ist und durch die Wellen (3, 4) entlang eines nahezu kreisförmigen Pfads eines Führungsnockenausschnitts (21) angetrieben wird, der mit Führungsrädern (20) der Greifer gekuppelt ist,
jeder sich drehende Körper (3, 4) durch ein Rad (140) ausgerichtet ist, das mit dem Körper (3, 4) durch einen Dreharm (141) verbunden ist, der durch einen Ausrichtungsnocken (142) geführt wird,
die vorderen Vorglättungsplatten (28) zwischen einer geschlossenen Ruheposition und einer offenen Arbeitsposition, die durch den Kontakt zwischen vorderen Rädern (130) und einem vorderen Nocken (131) gegenüber der Schließkraft jeweiliger Federn (10) erzwungen wird, bewegbar ist,
die hinteren Vorglättungsplatten (29) zwischen einer geschlossenen Ruheposition und einer offenen Arbeitsposition, die durch den Kontakt zwischen Rädern (51) und einem hinteren Nocken (132) gegenüber der Schließkraft jeweiliger Federn (11) erzwungen wird, bewegbar ist,
die Federn (10, 11) betriebsmäßig zwischen den Stützkörpern (3, 4) der Greifer (32, 34) und mobilen Körpern (8-9), die die drehbar an den Greifern (32, 34) montierten Vorglättungsplatten (28, 29) stützen, angeordnet sind, so dass sie die Bewegung zu der geschlossenen Ruheposition erzwingen,
wobei die Transversalwellen (1, 2) immer mit demselben Abstand zueinander in Betrieb sind.

2. Vorrichtung nach Anspruch 1, **dadurch gekennzeichnet, dass** jeder Körper (3, 4) durch steife Gabeln (5) drehbar gestützt ist und mit Seitenarmen (151) eines auf die Welle (1, 2) gekeilten Körpers durch eine Greiferfeder (152) elastisch verbunden ist.

3. Vorrichtung nach Anspruch 1 oder 2, **dadurch gekennzeichnet, dass** die Schneidemittel (15) aus einem mobilen Messer innerhalb eines Schlitzes (31) eines (32) der Greifer (32, 34) bestehen, wobei das Messer durch einen pneumatisch aktivierten Mechanismus (16) mit einem horizontalen pneumatischen Kolben (136), einem antreibenden Dreharm (137) und einem angetriebenen Dreharm (138), die durch einen Abstandshalter (139) miteinander verbunden sind, kommandiert wird.

4. Vorrichtung nach einem der Ansprüche 1-3, **dadurch gekennzeichnet, dass** jede Welle (1-2) zwei Paare von Greifern (32, 34) steuert, die unter 180° zueinander versetzt angeordnet sind.

## Revendications

1. Dispositif de fermeture et de découpe de film pour machines d'emballage de matériau allongé mobile le long d'un plan horizontal, comprenant des arbres transversaux rotatifs (1-2) synchronises entre eux, sur lesquels est fixée une paire de pinces (32, 34) comprenant un moyen de fermeture et de découpe (15) ;
des plaques de pré-aplatissement avant et arrière (28-29),
**caractérisé en ce que**
chaque pince (32, 34) est supportée par un corps rotatif (3, 4) et est entraînée par lesdits arbres (1, 2) le long d'un chemin presque circulaire d'une cavité de came de guidage (21) en prise avec des roues de guidage (20) desdites pinces,
chaque corps rotatif (3, 4) est orienté par une roue (140) raccordée audit corps (3, 4) par un bras rotatif (141) guidé par une came d'orientation (142),
lesdites plaques de pré-aplatissement avant (28) sont mobiles entre une position de repos fermée et une position de travail ouverte forcée par le contact entre les roues avant (130) et une came avant (131) à l'encontre de la force de fermeture de ressorts respectifs (10),
lesdites plaques de pré-aplatissement arrière (29) sont mobiles entre une position de repos fermée et une position de travail ouverte forcée par le contact entre des roues (51) et une came arrière (132) à l'encontre de la force de fermeture de ressorts respectifs (11),
lesdits ressorts (10, 11) étant interposés de manière fonctionnelle entre lesdits corps de support (3, 4) des pinces (32, 34) et des corps mobiles (8-9) supportant lesdites plaques de pré-aplatissement (28, 29) montées de manière rotative sur lesdites pinces (32, 34), de façon qu'ils forcent le mouvement vers la position de repos fermée,
lesdits arbres transversaux (1, 2) étant toujours actifs à la même distance l'un de l'autre.

2. Dispositif selon la revendication 1, **caractérisé en ce que** chaque corps (3, 4) est supporté de manière rotative par des fourchettes rigides (5) et raccordé de manière élastique à des bras latéraux (151) d'un corps cannelé sur ledit arbre (1, 2) par un ressort de pince (152).

3. Dispositif selon les revendications 1 ou 2, **caractérisé en ce que** ledit moyen de découpe (15) est constitué d'une lame mobile à l'intérieur d'une fente (31) dune (32) desdites pinces (32, 34), ladite lame est commandée par un mécanisme activé de façon pneumatique (16) comprenant un piston pneumatique horizontal (136), un bras rotatif d'entraînement (137) et un bras rotatif entraîné (138) raccordés l'un à l'autre par une pièce d'espacement (139).

4. Dispositif selon l'une quelconque des revendications 1 à 3, **caractérisé en ce que** chaque arbre (1-2) commande deux paires de pinces (32, 34) agencées à 180° l'une par rapport à l'autre.
